# EUROPEAN PATENT APPLICATION

(11) **EP 4 790 236 A2**
(43) Date of publication of application: **12.08.2026**
(21) Application number: 26152155.3
(22) Date of filing: 15.01.2026
(51) Int. Cl.: F01D 5/28, F01D 21/00, F01D 25/24, B22F 10/28, B33Y 80/00, F01D 9/04

(54) **TURBINE ENGINE COLD SECTION VANE STAGE**

(30) Priority: 15.01.2025 US 202519021830
(71) Applicant: RTX Corporation, Farmington, CT 06032 (US)
(72) Inventor: BLACK, Andrew Carl, Palm Bay, 32909 (US); KLINE, Bradley Paul, Middletown, 06457 (US); MATTIA, Stephen H., East Haddam, 06423 (US); YOCHIMOWITZ, Jacob Kyle, East Haddam, 06423 (US)
(74) Representative: Dehns

(57) **Abstract**

A gas turbine engine stator stage has: a case (100A, 100B); a plurality of vane clusters (120); and a plurality of vane singlets (150). The plurality of vane clusters (120) each have: an inner diameter first platform; an outer diameter first shroud mounted to the case (100A, 100B); and a plurality of first airfoils extending between the first platform and first shroud. The plurality of vane singlets (150) each have: an inner diameter second platform; an outer diameter second shroud; and a single second airfoil extending between the second platform and second shroud.

## Description

### BACKGROUND

The disclosure relates to gas turbine engines. More particularly, the disclosure relates to cold section engineering.

Many gas turbine engines (used in propulsion and power applications and broadly inclusive of turbojets, turboprops, turbofans, turboshafts, industrial gas turbines, and the like) have lower temperature sections which include at least the lowest pressure stages of axial compressors and may include fan stages for turbofan engines. Such fans and compressors may have composite vane structures in one or more stages for sake of weight reduction (vs. metallic vane structures), as enabled by the region's relatively lower operational temperatures.

### SUMMARY

One aspect of the disclosure, which the Applicant expressly reserves the right to claim independently, involves a gas turbine engine stator stage comprising: a case; a plurality of vane clusters; and a plurality of vane singlets. The plurality of vane clusters each have: an inner diameter first platform; an outer diameter first shroud mounted to the case; and a plurality of first airfoils extending between the first platform and first shroud. The plurality of vane singlets each have: an inner diameter second platform; an outer diameter second shroud; and a single second airfoil extending between the second platform and second shroud.

In a further example of the foregoing, additionally and/or alternatively, the vane clusters are each a majority, by-weight, non-metallic; and the singlets are each, by-weight, a majority metallic.

In a further example of any of the foregoing, additionally and/or alternatively: the vane clusters are each a majority, by-weight, organic matrix fiber composite; and the singlets are each, by-weight, a majority steel, titanium alloy, or nickel alloy.

In a further example of any of the foregoing, additionally and/or alternatively: adjacent first platforms and second platforms interfit with each other so that a first circumferential end of each of the first platforms and second platforms receives a second circumferential end section of an adjacent said first platform and second platform respectively.

In a further example of any of the foregoing, additionally and/or alternatively, at least one of the singlets includes measuring features not present in any of the doublets.

In a further example of any of the foregoing, additionally and/or alternatively, the measuring features are selected from the group consisting of: strain gages having leads passing through one or more passageways in the at least one of the singlets; thermocouples having leads passing through one or more passageways in the at least one of the singlets; and pressure sensor channels through the at least one of the singlets communicating with one or more pressure sensors.

In a further example of any of the foregoing, additionally and/or alternatively: the first platforms have first circumferential end sections and second circumferential end sections; the second platforms have first circumferential end sections and second circumferential end sections; the second end sections of the first platforms and second platforms are dimensioned to be received in the first end sections of the first platforms and the second platforms respectively.

In a further example of any of the foregoing, additionally and/or alternatively, no two of the singlets are adjacent.

A further example of any of the foregoing may additionally and/or alternatively include gas turbine engine or a rig including the gas turbine engine stator stage and wherein: said vane stage is one of a plurality of vane stages; and a plurality of blade stages alternate with said plurality of vane stages.

In a further example of any of the foregoing, additionally and/or alternatively, the plurality of vane stages are carried by a set of split case halves of the case.

In a further example of any of the foregoing, additionally and/or alternatively, the plurality of vane stages are fan stages.

A further example of any of the foregoing may additionally and/or alternatively include a method for manufacturing the gas turbine engine stator stage, the method comprising additive manufacture of the singlets.

A further example of any of the foregoing may additionally and/or alternatively include molding of the clusters.

In a further example of any of the foregoing, additionally and/or alternatively, the additive manufacture comprises at least one of: powder bed fusion-laser based (PBF-LB); selective laser sintering (SLS); and direct metal laser sintering (DMLS).

A further example of any of the foregoing may additionally and/or alternatively include a method for using the turbine engine stator stage, the method comprising: running an engine or rig containing the stage; and monitoring sensors associated with one or more of the vane singlets.

In a further example of any of the foregoing, additionally and/or alternatively, one or more of: the sensors include one or more strain gages on the one or more of the vane singlets and the monitoring comprises measuring strain; the sensors include one or more thermocouples on the one or more of the vane singlets and the monitoring comprises temperature measurement; and the sensors include one or more pressure transducers and the monitoring comprises measuring pressure through a passageway extending through the airfoil of the one or more of the vane singlets.

In a further example of any of the foregoing, additionally and/or alternatively, the sensors include said one or more pressure transducers and the monitoring comprises said measuring pressure and wherein an inlet is on a probe section protruding ahead of a leading edge of the respective second airfoil.

A further aspect of the disclosure, which the Applicant expressly reserves the right to claim independently, involves a gas turbine engine stator stage comprising: a plurality of vane clusters; and a plurality of vane singlets. The plurality of vane clusters each have: an inner diameter first platform; an outer diameter first shroud; and a plurality of first airfoils extending between the first platform and first shroud. The plurality of vane singlets each have: an inner diameter second platform; an outer diameter second shroud; and a second airfoil extending between the second platform and second shroud. The first platforms have first circumferential end sections and second circumferential end sections. The second platforms have first circumferential end sections and second circumferential end sections. The second end sections of the first platforms and second platforms are dimensioned to be received in the first end sections of the first platforms and the second platforms respectively.

In a further example of any of the foregoing, additionally and/or alternatively, no two of the singlets are adjacent.

In a further example of any of the foregoing, additionally and/or alternatively: the vane clusters are each a majority, by-weight, non-metallic; and the singlets are each, by-weight, a majority metallic.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a forward schematic view of a vane stage array installed within fan case upper and lower halves in a fan section of an engine.
FIG. 2 is a schematic partial sectional view of the engine with fan case and vane segments exploded away.

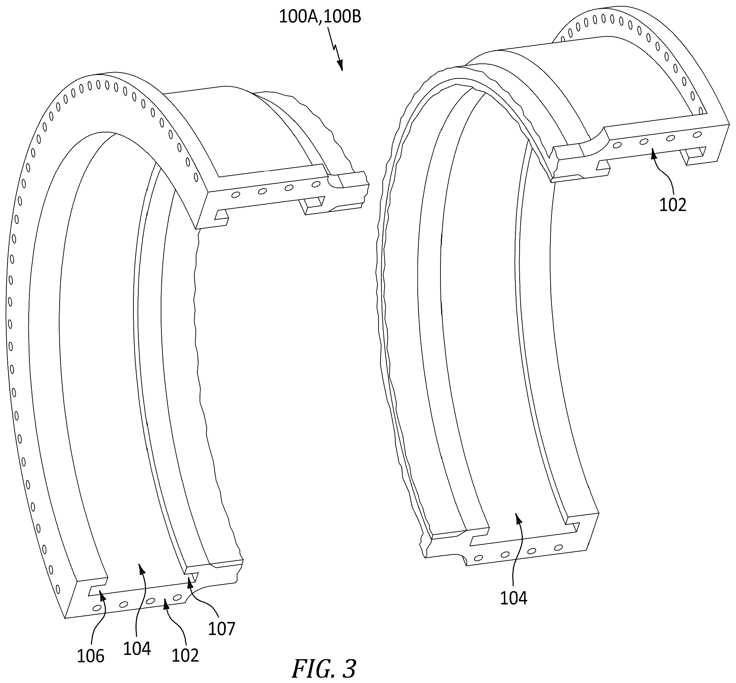

FIG. 3 is a view of a fan case half with vanes omitted.
FIG. 4 is a view of an example vane doublet exploded away from a receiving slot in a fan case segment.
FIG. 5 is a view of a first vane singlet.
FIG. 6 is a view of a second vane singlet.

Like reference numbers and designations in the various drawings indicate like elements.

### DETAILED DESCRIPTION

Engineering and testing of gas turbine engines with composite vane stages presents challenges of measurement. It is particularly difficult to integrate instrumentation with composite vanes. Accordingly, one or more composite vanes in a given stage may be replaced with metallic (e.g., additively manufactured) vanes of equivalent shape in the gaspath.

Not only may metallic vanes offer greater ability to integrate instrumentation (e.g., attaching instruments at various locations), additive manufacture may allow flexibility of in-built instrumentation or associated features such as passageways. In comparison to baseline composite vane cluster manufacturing, it is also relatively easy to manufacture a metallic vane through computer numerical control (CNC) milling from a block of alloy. It is alternatively relatively easy to additively manufacture a single vane (i.e., a singlet) with passageways or other features. These single metallic vanes can then be inserted into discrete locations within the circumference of the vane cluster.

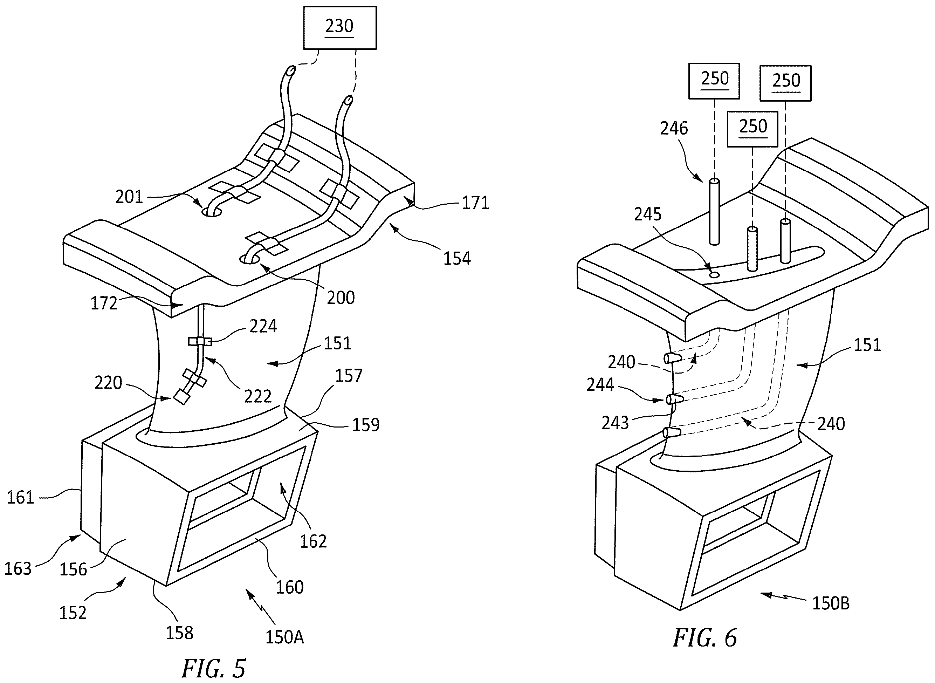

Additionally, in a baseline engine with vane clusters, manufacturing metallic vane singlets may have advantages. Use of metallic singlets (instead of metallic clusters) simplifies CNC manufacturing and instrumentation incorporation to a given vane gaspath surface by providing a relatively simpler geometry requiring less raw material, the end resultant geometry of which provides clear lines of site to the vane's gaspath surfaces for attaching instrumentation (FIG 5.). Additionally, singlets provide flexibility for incorporation into an existing vane cluster while limiting disturbance to the functional behavior of that cluster by virtue of replacing less of the baseline composite cluster hardware with metallic proxies, improving measurement accuracy. Thus, singlets may be installed adjacent baseline clusters on either side with at least two total singlets in a given stage replacing a single doublet. Nevertheless, as discussed below, a greater number of doublets being replaced is also possible. Also, whereas two similarly or differently instrumented singlets may replace a doublet, an instrumented singlet may be accompanied by a non-instrumented metallic singlet to replace a doublet. This allows economical re-use of the non-instrumented singlets when different instrumented singlets are used.

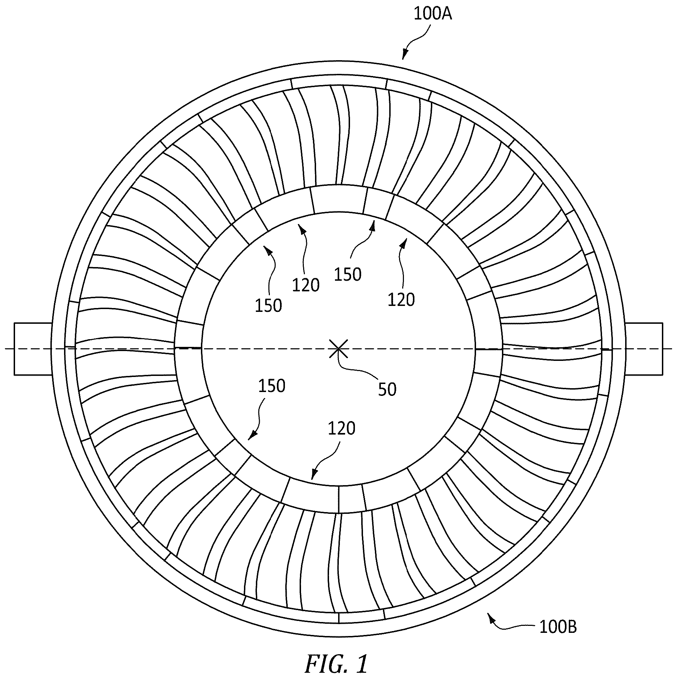

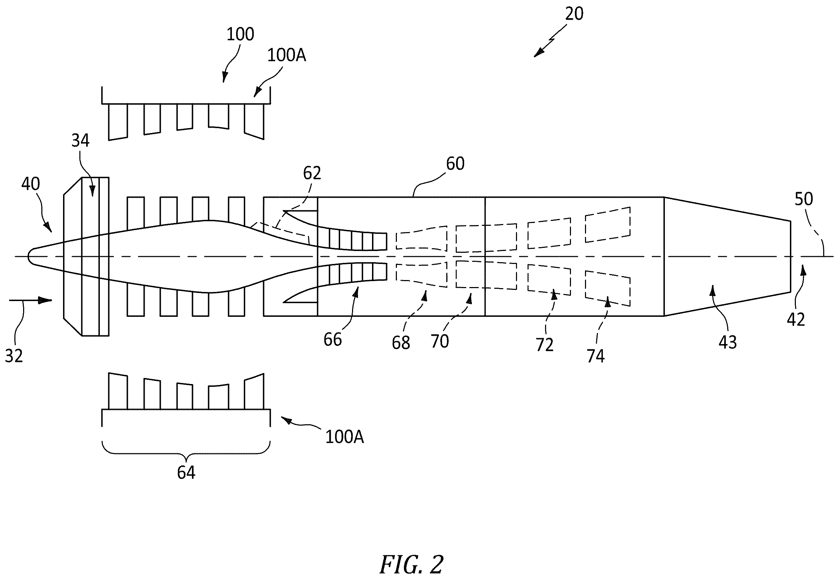

FIG. 1 shows an example stator vane stage such as in the fan section 64 of a gas turbine engine - specifically a low bypass turbofan engine 20 (FIG. 2) of an aircraft. The aircraft may have a body/fuselage/airframe containing the engine at least partially in an engine bay for producing thrust to propel the aircraft. The example is a crewed aircraft, but alternatives include uncrewed aircraft, watercraft, and the like. The fuselage defines an upstream air inlet of an inlet duct leading from an air inlet (not shown) to the engine bay so that an inlet air flowpath passes an inlet air flow 32 to an inlet 40 of the engine. The example inlet may be at a strut stage 34.

The example gas turbine engine extends aft to an outlet 42 (e.g., at an exhaust nozzle 43) and has a central longitudinal axis or centerline 50 generally forming the axis of rotation of the engine's rotors.

The gas turbine engine has a case structure 60 enclosing a gaspath 62 through the engine passing sequentially through an example fan section 64 having one or more fan blade stages, compressor section(s) 66, 68 each having one or more compressor blade stages, a combustor section 70, and turbine section(s) 72, 74 each having one or more stages of turbine blades. The example engine also includes a bypass flowpath branching from the gaspath 62 between fan and compressor sections. The various blade stages of each relevant section may be interspersed with vane stages. The example gas turbine engine is a two-spool engine having a low speed/pressure spool including the blades of the fan section 64, compressor section 66, and turbine section 74. A high speed/pressure spool includes the blades of the high pressure compressor section 68 and the high pressure turbine section 72. The example combustor sections may include an array of can-type combustors or a single annular combustor.

The example fan section 64 has a split fan case 100 with an upper half 100A and a lower half 100B mounted to each other such as by axially-extending bolting flanges 102 at circumferential ends of the segments. The inner diameter (ID) surface of each case segment has mounting features 104 for associated stages of stator vanes that alternate with the blade stages of the fan section. Example mounting features are circumferentially-extending slots with fore and aft undercuts 106, 107 for retaining fore and aft end portions 140, 141 of the outer diameter (OD) shrouds 126 of the associated stator vane stage.

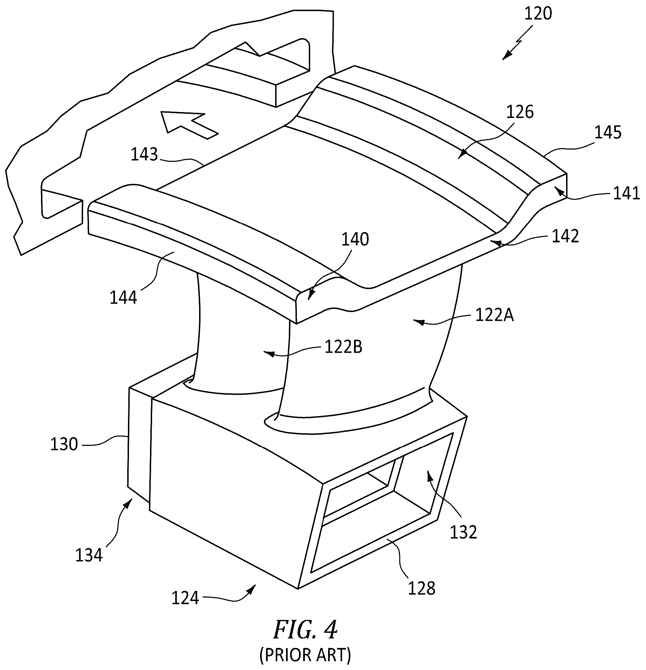

Example stator vanes include vanes 120 (FIG. 4) formed as clusters wherein each cluster includes multiple airfoils 122A, 122B extending radially from a shared/common inner diameter (ID) platform/shroud structure 124 to the shared/common outer diameter (OD) shroud structure 126. Such clusters are typically doublets (two airfoils), although triplets (three airfoils) and larger vane segment quantities (four airfoils and higher) are also known. Example ID platforms 124 are configured as hollow box-like structures extending from a first open circumferential end 128 to a second open circumferential end 130. Respective first and second circumferential end sections 132, 134 are shaped to interfit (e.g., each second (male) circumferential end section is necked down slightly to be received within the adjacent first (female) circumferential end section to form via male/female swage joints). The OD shroud extends from a first circumferential end 142 to a second circumferential end 143 and from a leading/forward end 144 to a trailing/aft end 145. The OD shroud has an inner diameter (ID) gaspath surface and an outer diameter surface.

In general, for ease of assembly, half of the clusters are mounted to the upper case segment 100A and the other half mounted to the lower 100B so that, when the two case segments are assembled, the associated clusters mate (with the protruding second end section 134 of a cluster of each stage in the upper segment being received in the associated first end section 132 of the associated terminal/exposed cluster of that stage in the other segment).

Such clusters may be manufactured of composites (e.g., organic matrix composites such as fiber-reinforced polymer matrix composite). Example fibers include carbon, glass, aramid, silicon carbide, and the like. Alternative composites are ceramic matrix composites (CMC). Thus described with only the clusters, the engine is characteristic of one group of baseline engines. As a further modification, however, one or more of the composite clusters of a given stage are replaced by multiple metallic singlets 150 (FIG. 1).

The metallic singlets may be used for experimental purposes such as discussed below. In various implementations, this may allow testing of the engine using sensors that would otherwise be difficult to integrate with (e.g., bodily incorporate or adhere to) composite vane airfoils. Additionally or alternatively, it may allow variations in vane geometry to be experimentally tested. Example manufacturing techniques for the metallic singlets principally involve computer numerical control (CNC) machining from metallic raw material stock (bar stock or sliced segments from a forged ring), or additive manufacture (e.g., powder bed fusion-laser based (PBF-LB), selective laser sintering (SLS), direct metal laser sintering (DMLS), and the like).

The metallic singlets may thus each have an airfoil 151 extending radially between a box-like inner diameter (ID) platform/shroud structure 152 and a plate-like outer diameter (OD) shroud structure 154. As with the baseline cluster, each airfoil has a leading edge, a trailing edge, a pressure side and a suction side. As with the baseline cluster, the ID platform has a forward/leading end 156, an aft/trailing end 157, an inner diameter surface 158, an outer diameter or gaspath surface 159, and first and second circumferential ends 160, 161. As with the baseline cluster, a second circumferential end section 163 is necked down so as to be receivable in the first circumferential end section 132A of a cluster platform. Similarly, the first circumferential end section 162 is dimensioned to receive the second circumferential end section 134 of the baseline cluster platform.

Example OD shrouds of the singlets have the same basic mounting features 170, 171 as the baseline clusters. This may involve a radially outwardly offset terminal section at the fore and aft ends/edges complementary to the slot undercut 106, 107 so that an inner diameter (ID) surface of the OD shroud axially inward of the mounting features ends is, when mounted, close to flush with the case segment inner diameter (ID) surface aside the slot.

Discussed further below, although multiple instrumented singlets may be used in a given stage, alternatively less than all may be instrumented with others simply providing numerical or structural balance. For example, if a baseline stage has eighteen doublets with the doublets mounted to the upper case segment and nine doublets mounted to the lower case segment, one example of a modification might include preserving seven baseline doublets on each segment but adding four metallic singlets. Although two metallic singlets could be mated to each other to simulate a doublet, alternatively, metallic singlets may be spaced apart (FIG. 1) causing a shift of the doublets. For example, In the eighteen doublet baseline, each modified segment/half (FIG. 1) could thus retain seven doublets with six of them in groups of two interspersed with singlets and then a single terminal doublet. In the illustrated FIG. 1 full 360° grouping, this leaves six adjacent pairs of two doublets interspersed with singlets and a final two doublets alone separated by a singlet. Other combinations are possible. Also, that might be done for both halves for symmetry. Such a situation might occur even if only one of the singlets is instrumented or if only two are (e.g., instrumenting one upper singlet and one lower singlet). FIG. 1 schematically shows an example such pattern. Other numbers and combinations are possible. For example, in an alternative eight doublet baseline, each modified segment/half could have two terminal doublets, a central doublet, and a respective singlet at each side of the central doublet. There may be triplet or higher quantity alternatives to doublets. Use of additive singlets instead of additive doublets also speeds up customization.

As one example of sensors, FIG. 5 shows an example singlet 150A having an additively manufactured body pre-formed with instrumentation holes/passageways 200, 201 through the OD shroud to its ID surface respectively adjacent the pressure side and suction side. This allows instrumentation to pass through. One example of instrumentation is a strain gauge 220 mounted to the surface of the metallic substrate and connected to external monitoring hardware 230 via leads 222 which ultimately pass through the associated passageways 200 or 201. The leads may be held in place via tack welded strapping 224. An alternative example might be a thermocouple. Such strain gages or thermocouples may be positioned at locations of importance on the vane surface (or potentially internally) to calibrate stress or thermal analysis results performed during hardware development.

FIG. 6 shows an alternative vane 150B having pre-formed passageways 240 through the airfoil from the OD shroud OD surface. These may be used as pressure probes and may pass through to target locations on the airfoil surface. FIG. 6 particularly shows a spanwise array of pressure channels along the leading edge extending to integral protrusions 243 with distal inlets 244. External conduits 246 may be mated to the passageways at outlets 245 in the additive piece to, in turn, pass gas to a sensor 250 such as a pressure sensor (e.g., pressure transducer), a composition sensor, or the like. Placing the inlet on a probe section protruding ahead of the leading edge of the airfoil allows pressure measurement without leading edge pressure disruption, for purposes of calibrating aerodynamic analysis results performed during hardware development. It also may allow compositional sampling with reduced bias from boundary effects directly along the pressure or suction side.

Example composite cluster manufacture techniques and materials are: autoclave processes; resin transfer molding (RTM) processes within a closed tool (e.g., same-qualified resin transfer molding (SQRTM)); and compression molding processes in which hydraulic presses apply pressure to a tool containing the composite. Example materials include bismaleimide resin systems with carbon fiber reinforcement, as well as polyimide resin systems with carbon fiber reinforcement. Epoxy resins and Fiberglass fiber are also applicable, as well as any other organic (polymer) matrix composite material. Additionally, material options should be similarly viable for CMC materials.

Example singlet non-additive manufacture technique and materials is computer numerical control (CNC) multi-axis milling of a single geometry. Example materials include steel, titanium alloy, or nickel alloy bar stock. Steel is more readily available, more easily manufacturable material (if any post-processing machining is necessary) and well suited to ground testing applications where gross engine weight is less of a concern. Titanium alloys provide a lighter alternative when engine weight is a concern such as flight testing activities. Nickel-based alloys may also be utilized where higher temperature and/or strength capability is necessary to replace the baseline cluster geometry without threat of durability shortfall.

Example singlet additive manufacture techniques and materials are powder bed fusion-laser beam (PBF-LB), also known as selective laser melting (SLM) or direct metal laser sintering (DMLS) wherein a laser is utilized to melt and fuse metallic powders together into a single geometry. Material selections would typically be steel or titanium alloy powders, wherein steel powders are more readily available, more easily manufacturable material (if any post-processing machining is necessary) well suited to ground testing applications where gross engine weight is less of a concern, while titanium powders provide a lighter alternative when engine weight is a concern such as flight testing activities. Nickel-based powders may also be utilized where higher temperature and/or strength capability is necessary to replace the baseline cluster geometry without threat of durability shortfall.

In further variations, the vane stage may be utilized for test purposes in less/other than an engine. Some examples may involve a compressor rig. An example compressor rig is used to test compressor components and may represent a partial representation of an engine, where the compressor region of the engine is fully represented, but aft of that point it isn't. The power source to drive the rig is an external source (e.g., an electric motor or steam-powered system to spin the shaft to drive the compressor blade stages because there is no means to fuel/ignite the compressed air, nor turbine(s) behind that point to extract power from to drive the compressor(s)).

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A gas turbine engine stator stage comprising:
a case (100);
a plurality of vane clusters (120) each having:
an inner diameter first platform (124);
an outer diameter first shroud (126) mounted to the case (100); and
a plurality of first airfoils (122A; 122B) extending between the first platform (124) and first shroud (126); and
a plurality of vane singlets (150A; 150B) each having:
an inner diameter second platform (152);
an outer diameter second shroud (154); and
a single second airfoil (151) extending between the second platform (152) and second shroud (154),
wherein:
the vane clusters (120) are each a majority, by-weight, non-metallic; and
the singlets (150A; 150B) are each, by-weight, a majority metallic.

2. The gas turbine engine stator stage of claim 1 wherein:
the vane clusters (120) are each a majority, by-weight, organic matrix fiber composite; and
the singlets (150A; 150B) are each, by-weight, a majority steel, titanium alloy, or nickel alloy.

3. The gas turbine engine stator stage of claim 1 or 2 wherein:
adjacent first platforms (124) and second platforms (152) interfit with each other so that a first circumferential end (128, 161) of each of the first platforms (124) and second platforms (152) receives a second circumferential end section (134; 163) of an adjacent said first platform (124) and second platform (152) respectively.

4. The gas turbine engine stator stage of any preceding claim wherein:
at least one of the singlets (150A; 150B) includes measuring features (230; 250) not present in any of the vane clusters (120).

5. The gas turbine engine stator stage of claim 4 wherein:
the measuring features (230; 250) are selected from the group consisting of:
strain gages (230) having leads (222) passing through one or more passageways (200; 201; 240) in the at least one of the singlets (150A; 150B);
thermocouples (230) having leads (222) passing through one or more passageways (200; 201; 240) in the at least one of the singlets (150A; 150B); and
pressure sensor channels through the at least one of the singlets (150A; 150B) communicating with one or more pressure sensors (250).

6. The gas turbine engine stator stage of any preceding claim wherein:
the first platforms (124) have first circumferential end sections (132) and second circumferential end sections (134);
the second platforms (152) have first circumferential end sections (162) and second circumferential end sections (163); and
the second end sections (134) of the first platforms (124) and second platforms (152) are dimensioned to be received in the first end sections (132) of the first platforms (124) and the second platforms (152) respectively.

7. The gas turbine engine stator stage of any preceding claim wherein:
no two of the singlets (150A; 150B) are adjacent.

8. A gas turbine engine or a rig including the gas turbine engine stator stage of any preceding claim and wherein:
said vane stage is one of a plurality of vane stages; and
a plurality of blade stages alternate with said plurality of vane stages.

9. The gas turbine engine or rig of claim 8 wherein the plurality of vane stages are carried by a set of split case halves (100A, 100B) of the case (100), optionally wherein the plurality of vane stages are fan stages.

10. A method for manufacturing the gas turbine engine stator stage of any of claims 1 to 7, the method comprising:
additive manufacture of the singlets (150A; 150B).

11. The method of claim 10 further comprising:
molding of the clusters (120).

12. The method of claim 10 or 11 wherein the additive manufacture comprises at least one of:
powder bed fusion-laser based (PBF-LB);
selective laser sintering (SLS); and
direct metal laser sintering (DMLS).

13. A method for using the turbine engine stator stage of any of claims 1 to 7, the method comprising:
running an engine (20) or rig containing the stage; and
monitoring sensors (230; 250) associated with one or more of the vane singlets (150A; 150B).

14. The method of claim 13 wherein one or more of:
the sensors (230; 250) include one or more strain gages (230) on the one or more of the vane singlets (150A; 150B) and the monitoring comprises measuring strain;
the sensors (230; 250) include one or more thermocouples (230) on the one or more of the vane singlets (150A; 150B) and the monitoring comprises temperature measurement; and
the sensors (230; 250) include one or more pressure transducers (250) and the monitoring comprises measuring pressure through a passageway (200; 201; 240) extending through the airfoil (151) of the one or more of the vane singlets (150A; 150B),
optionally, wherein:
the sensors (230; 250) include said one or more pressure transducers (250) and the monitoring comprises said measuring pressure and wherein an inlet (244) is on a probe section protruding ahead of a leading edge of the respective second airfoil (151).

15. A gas turbine engine stator stage comprising:
a plurality of vane clusters (120) each having:
an inner diameter first platform (124);
an outer diameter first shroud (126); and
a plurality of first airfoils (122A; 122B) extending between the first platform (124) and first shroud (126); and
a plurality of vane singlets (150A; 150B) each having:
an inner diameter second platform (152);
an outer diameter second shroud (154); and
a second airfoil (151) extending between the second platform (152) and second shroud (154),
wherein:
the first platforms (124) have first circumferential end sections (132) and second circumferential end sections (134);
the second platforms (152) have first circumferential end sections (162) and second circumferential end sections (163); and
the second end sections (134, 163) of the first platforms (124) and second platforms (152) are dimensioned to be received in the first end sections (132, 162) of the first platforms (124) and the second platforms (152) respectively,
optionally wherein:
no two of the singlets (150A: 150B) are adjacent; and/or
the vane clusters (120) are each a majority, by-weight, non-metallic and the singlets (150A: 150B) are each, by-weight, a majority metallic.
